# EUROPEAN PATENT APPLICATION

(11) **EP 3 343 865 A1**
(43) Date of publication of application: **04.07.2018**
(21) Application number: 17190744.7
(22) Date of filing: 18.06.2010
(51) Int. Cl.: H04L 29/06

(54) **METHOD, SYSTEM, AND APPARATUS FOR IMPLEMENTING MACHINE-TO-MACHINE SERVICE**

(30) Priority: 19.06.2009 CN 200910150636
(62) Divisional of application: 10788951.1
(71) Applicant: Nokia Technologies Oy, 02610 Espoo (FI)
(72) Inventor: HAN, Guanglin, Shenzhen, Guangdong 518129 (CN); ZHANG, Peng, Shenzhen, Guangdong 518129 (CN)
(74) Representative: Style, Kelda Camilla Karen

(57) **Abstract**

Embodiments of the present invention discloses a method of implementing a machine-to-machine (M2M) service. The method includes: receiving an M2M service request sent by a source M2M service entity; determining, based on resource scheduling information, whether it is allowed to perform an M2M service indicated by the M2M service request; if the determining result is yes, sending the M2M service request to a target M2M service entity based on target address information carried in the M2M service request. Accordingly, embodiments of the present invention also disclose a system and a connection network for implementing a machine-to-machine service, which effectively avoids performing the M2M service when the network load is heavy. In this way, the normal performance of other communication services is not affected when the M2M service is being performed, and the service quality of the M2M service can be improved accordingly.

## Description

The application claims priority of Chinese Patent Application No. 200910150636.3, filed on June 19, 2009, entitled "METHOD, SYSTEM, AND APPARATUS FOR IMPLEMENTING MACHINE-TO-MACHINE SERVICE," the contents of which are incorporated herein by reference in its entirety.

### FIELD

The present invention relates to the field of network techniques and in particular, to a method, system, and apparatus for implementing a machine-to-machine service.

### BACKGROUND

With the development of science and technology, an increasing number of devices require communication and networking, and a concept of machine-to-machine (M2M) is produced accordingly. In addition, M2M may be understood as a variety of concepts including Man-to-Machine, Machine-to-Man, Mobile-to-Machine, and Machine-to-Mobile. In summary, the main purpose of M2M is to provide a simple way to establish radio connections between systems, remote devices, and individuals for real-time data of devices. The M2M technology integrates data collecting, remote monitoring, communication, and information technologies such that more and more devices can have the communicating and networking capabilities and thus everything can be networked.

Currently, the following methods are mainly utilized to implement an M2M service:
First method: If a networked device in an M2M service entity initiates an M2M service and initiates uplink signaling to an M2M server, the networked device first needs to establish a connection with the M2M server. The networked device first establishes a connection with a base station and then establishes a bearer of a communication system with non-access stratum (NAS) signaling over the established connection. Subsequently, the networked device sends M2M signaling to the base station through the bearer, and the base station sends the M2M signaling to a core network through a core network bearer. Finally, the core network sends the M2M signaling to the M2M server.
Second method: If an M2M server in an M2M service entity initiates an M2M service and initiates downlink signaling to a networked device, the M2M server first needs to establish a connection with the networked device. The M2M server sends downlink M2M signaling to the core network. The core network sends a paging to the networked device to a base station of an access network based on the received M2M signaling. The base station of the access network initiates a paging to the networked device. The paged networked device establishes a connection with the base station and the networked device establishes a bearer of a communication system with non-access stratum signaling over the established connection. Subsequently, a core network device sends the M2M signaling to the base station through the bearer and the base station sends the M2M signaling to the networked device.

EP 0637160 A2, which is published on February 01, 1995, discloses a method of interactively processing telephone calls in a distributed system. The distributed system includes at least two computer workstations connected together by a communication link. Specifically, EP 0637160A2 discloses at column 7 line 25 to column 8 line 10 and Figs. 2-4 a process where a remote resource can be utilized, which includes the following steps: the channel processor requests a custom server to obtain the resource; the custom sever sends a datagram out to the resource controller, where the datagram identifies the resource required by the custom server; the resource controller checks its table of available resources and returns a message to the custom server containing information identifying the allocated server; the custom server forwards the location information onto the resource processor, allowing the resource processor to communicate with the server.

The foregoing methods have at least the following problems: when the M2M server and the networked device initiates communication through the M2M signaling, the processing on the M2M signaling by the communication network increases the load of the system, thus affecting the performance of other communication services and causing the network service quality to be degraded.

### SUMMARY

Embodiments of the present invention provide a method, system, and apparatus for implementing a machine-to-machine service, which enables system resources of a connection network to be scheduled properly and avoids the problem of affecting other communication service when implementing the M2M service.

To solve the foregoing technical problems, embodiments of the present invention provide a method of implementing a machine-to-machine service, which includes: receiving an M2M service request from a source M2M service entity, where the M2M service request includes information on an M2M service access mode; determining, based on resource scheduling information, whether it is allowed to perform an M2M service indicated by the M2M service request, where the resource scheduling information includes different priorities set for different M2M service access modes; in response to determining that it is allowed to perform the M2M service indicated by the M2M service request based on the resource scheduling information, sending the M2M service request to a target M2M service entity based on target address information carried in the M2M service request.

According to an implementation of the method, the method further includes: in response to determining that it is not allowed to perform the M2M service indicated by the M2M service request based on the resource scheduling information, sending an access rejection message to the source M2M service entity, or, recording the M2M service request and allowing the source M2M service entity to re-initiate the M2M service request within a period of time.

According to an implementation of the method, the access rejection message includes an access rejection reason and/or time to initiate a next M2M service request by the source M2M service entity.

Embodiments of the present invention provide a connection network for implementing an M2M service, which includes: a receiving unit configured to receive an M2M service request from a source M2M service entity, where the M2M service request includes information on an M2M service access mode; a determining unit configured to determine, based on resource scheduling information, whether it is allowed to perform an M2M service indicated by the M2M service request, where the resource scheduling information includes different priorities set for different M2M service access modes; a sending unit configured to , in response to determining that it is allowed to perform the M2M service indicated by the M2M service request based on the resource scheduling information, send the M2M service request to a target M2M service entity based on target address information carried in the M2M service request.

According to an implementation of the connection network, the sending unit is further configured to, in response to determining that it is not allowed to perform the M2M service indicated by the M2M service request based on the resource scheduling information, send an access rejection message to the source M2M service entity, or, record the M2M service request and allow the sourceM2M service entity to re-initiate the M2M service request within a period of time.

According to an implementation of the connection network, the access rejection message includes an access rejection reason and/or time to initiate a next M2M service request by the source M2M service entity.

Compared with conventional technologies, technical solutions provide according to the embodiments of the present invention has the following advantages and features: when an M2M service entity is performing an M2M service, the connection network on which the M2M service entity is based determines whether the request is accessible based on a received access request and pre-stored judging criteria. The M2M service can be performed only when the determining result indicates that the request is accessible, which thus effectively avoids performing the M2M service when the network load is heavy. In this way, the normal performance of other communication services is not affected when the M2M service is being performed, and the service quality of the M2M service can be improved accordingly.

### BRIEF DESCRIPTION OF THE DRAWINGS

To make the technical solutions of the embodiments of the present invention or the conventional technologies clearer, accompanying drawings used in the description of the embodiments or the conventional technologies are briefly described in the following. It is apparent that the accompanying drawings in the following description are only some embodiments of the present invention ad those skilled in the art would obtain other drawings according to these drawings without creative efforts.
FIG. 1 is a flowchart of a method of implementing an M2M service according to an embodiment of the present invention;
FIG. 2 is a flowchart of a further method of implementing an M2M service according to an embodiment of the present invention;
FIG. 3 is a structural diagram of a system for implementing an M2M service according to an embodiment of the present invention;
FIG. 4 is a structural diagram of a connection network for implementing an M2M service according to an embodiment of the present invention;
FIG. 5 is a flowchart of a method of implementing an M2M service based on a mobile communication network according to an embodiment of the present invention;
FIG. 6 is a flowchart of a further method of implementing an M2M service based on a mobile communication network according to an embodiment of the present invention; and
FIG. 7 is a flowchart of a third method of implementing an M2M service based on a mobile communication network according to an embodiment of the present invention.

### DETAILED DESCRIPTION OF THE EMBODIMENTS

The technical solutions of the embodiments of the present invention will be described clearly and completely below with reference to the accompanying drawings. Obviously, the described embodiments are only parts rather than all of the embodiments of the present invention. All other embodiments that could be obtained by those skilled in the art based on the embodiments of the present invention without creative efforts would also fall within the scope of the present invention.

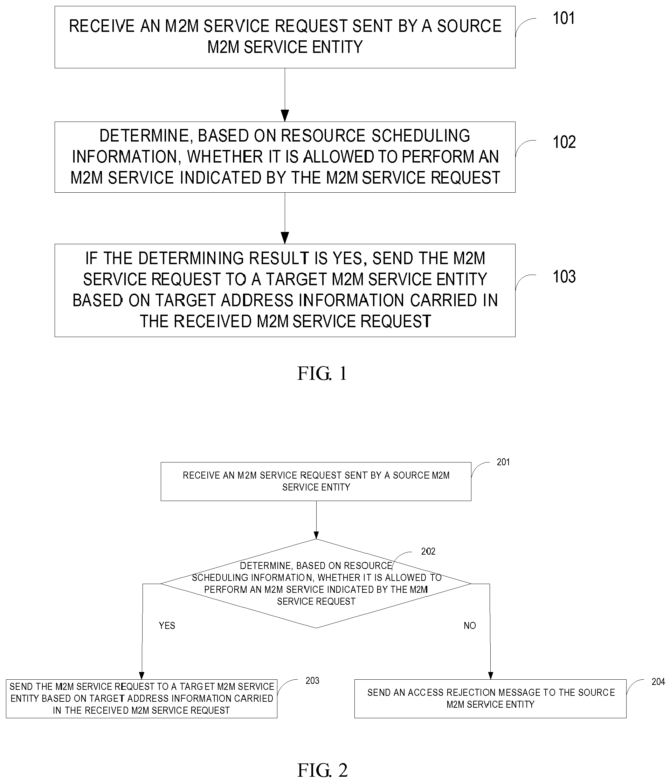

An embodiment of the present invention provides a method of implementing an M2M service, the specific steps of which are shown in FIG. 1:
Step 101: Receive an M2M service request sent by a source M2M service entity;
Step 102: Determine, based on resource scheduling information, whether it is allowed to perform an M2M service indicated by the M2M service request;
Step 103: If the determining result is yes, send the M2M service request to a target M2M service entity based on target address information carried in the M2M service request.

In the method of implementing an M2M service as provided according to the embodiments of the present invention, after the service request initiated by the source M2M service entity is received, it is able to determine, based on certain judging criteria, whether it is allowed to perform the M2M service at this time. The M2M service can be performed only when the determining result is yes, which thus effectively avoids performing the M2M service when the network load is heavy. In this way, the normal performance of other communication services is not affected when the M2M service is being performed, and the service quality of the M2M service can be improved accordingly.

An embodiment of the present invention also provides a further method of implementing an M2M service, the specific steps of which are shown in FIG. 2:
Step 201: Receive an M2M service request sent by a source M2M service entity.

In step 201, a connection network receives the M2M service request sent by the source M2M service entity. The source M2M service entity may be a networked device with a M2M function or an M2M server, which crucially depends on who, the networked device or the M2M server, is the initiator of the M2M service request.

Step 202: Determine, based on resource scheduling information, whether it is allowed to perform an M2M service indicated by the M2M service request.

In step 202, the resource scheduling information may be information about a current network load. For example, the connection network may obtain the information about the current network load. If the information indicates that the current network load is small and that the M2M service may be performed, the connection network may directly perform subsequent operations for implementing the M2M service. In addition, the resource scheduling information may also be an access scheduling policy that is pre-configured in an access network. For example, different priorities may be set for different M2M service types or for different M2M service access modes. In this way, when determining whether it is allowed to perform the M2M service, it is necessary to check identification information (such as information about the service type, information about the access mode, and the like) carried in the received M2M service request first and then to check whether the M2M service indicated by the M2M service request has a higher priority based on the access scheduling policy, so as to determine whether it is allowed to perform the M2M service. In addition, the resource scheduling information may also be subscription information of the M2M service entity, which is obtained through pre-subscription of the M2M service entity and the connection network and can be pre-configured in the connection network. For example, the subscription information may include different types of information such as a type of the M2M service entity, a type of the M2M service, a group to which the M2M service belongs, information about the frequency at which the M2M service entity is allowed to access, and the like. In this way, when determining whether it is allowed to perform the M2M service, it is necessary to check identification information (such as information about the service type, information related to the source M2M service entity, and the like) carried in the received M2M service request first and then to check whether the M2M service indicated by the M2M service request may be allowed to be performed based on the subscription information of the M2M service entity. When the foregoing determining is performed, depending on the specific conditions of the connection network, the determining may be performed based on only a certain judging criterion or based on a combination of multiple judging criteria. After the foregoing determining is completed, if the determining result is yes, then step 203 is executed; if the determining result is no, step 204 is executed.

Step 203: Send the M2M service request to a target M2M service entity based on target address information carried in the M2M service request.

In step 203, if the determining result indicates that the M2M service indicated by the M2M request message may be performed at this time, the connection network needs to send the M2M service request to the target M2M service entity. For example, if the source M2M service entity is a networked device, the connection network needs to send the received M2M service request to a corresponding M2M server; and if the source M2M service entity is an M2M server, the connection network needs to send the received M2M service request to a corresponding networked device, in order to perform the M2M service.

Step 204: Send an access rejection message to the source M2M service entity.

In step 204, if the determining result indicates that it is not allowed to perform the M2M service indicated by the M2M service request at this time, the connection network needs to send an access rejection message to the source M2M service entity to notify the source M2M service entity that the M2M service cannot be performed temporarily. In addition, the access rejection message may also include an access rejection reason to notify the source M2M service entity of current network conditions. Accordingly, the access rejection message may also include time to initiate a next M2M service request, which time is used for reference by the source M2M service entity for when to initiate the next M2M service request.

In the method of implementing an M2M service according to the embodiments of the present invention, after receiving a service request initiated by the source M2M service entity, the connection network may determine, based on certain judging criteria, whether the M2M service may be performed at this time. The M2M service can be performed only when the determining result is yes, which thus effectively avoids performing the M2M service when the network load is heavy. In this way, the normal performance of other communication services is not affected when the M2M service is being performed, and the service quality of the M2M service can be improved accordingly.

In addition, in the method of implementing an M2M service according to the embodiments of the present invention, when the M2M service cannot be performed, the connection network sends the access rejection message to the source M2M service entity, and if the access rejection message includes information such as an access rejection reason and time to initiate a next M2M service, the method may also efficiently avoid re-initiating the M2M service request by the source M2M service entity during an inappropriate period of time, thereby improving efficiency for performing the M2M service.

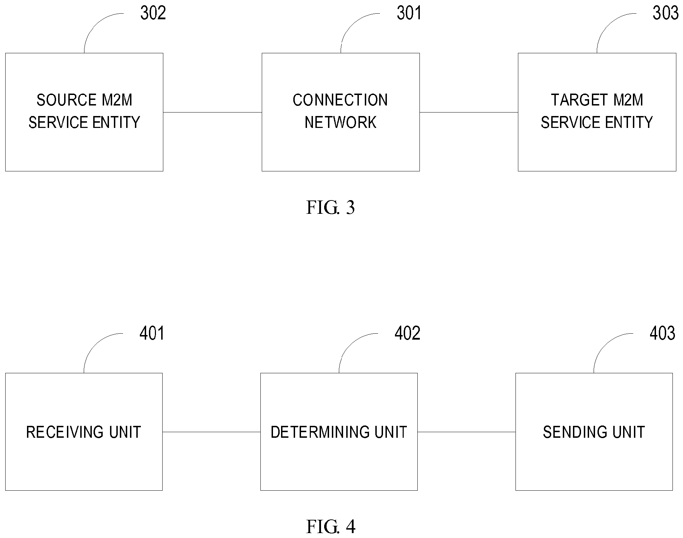

Accordingly, an embodiment of the present invention also provides a system for implementing an M2M service. As shown in FIG. 3, the system includes a connection network 301, and a source M2M service entity 302 and a target M2M service entity 303 that are communicatively connected with the connection network 301.

The connection network 301 is configured to receive an M2M service request sent by a source M2M service entity, determine, based on the resource scheduling information, whether it is allowed to perform an M2M service indicated by the received M2M service request, and when the determining result is yes, send the M2M service request to a target M2M service entity based on target address information carried in the received M2M service request.

The source M2M service entity 302 is configured to send the M2M service request to the connection network 301.

The target M2M service entity 303 is configured to receive the M2M service request sent by the connection network 301.

The M2M service may be implemented through the foregoing system by using the following manner:

First, the source M2M service entity 302 sends the M2M service request to the connection network 301, where the source M2M service entity 302 may be a networked device or an M2M server. After receiving the M2M service request, the connection network 301 determines, based on preset resource scheduling information, whether it is allowed to perform the M2M service indicated by the M2M service request, where the resource scheduling information may include information such as information about the current network load, an access scheduling policy, or subscription information of the M2M service entity. If the determining result is yes, the received M2M service request is sent to the target M2M service entity 303. Here, if the source M2M service entity 302 is a networked device, then the target M2M service entity 303 is an M2M server, and if the source M2M service entity 302 is an M2M server, then the target M2M service entity 303 is a networked device. If the determining result is no, an access rejection message is sent to the source M2M service entity.

In the system for implementing an M2M service according to the embodiment of the present invention, after receiving a service request initiated by the M2M entity, the connection network may determine, based on pre-stored judging criteria, whether the M2M service may be performed at this time. The M2M service can be performed only when the determining result is yes, which thus effectively avoids performing the M2M service when the network load is heavy. In this way, the normal performance of other communication services is not affected when the M2M service is being performed, and the service quality of the M2M service can be improved accordingly.

Further, an embodiment of the present invention provides a connection network for implementing an M2M service. As shown in FIG. 4, the connection network includes: a receiving unit 401 configured to receive an M2M service request sent by a source M2M service entity; a determining unit 402 configured to determine, based on resource scheduling information, whether it is allowed to perform an M2M service indicated by the M2M service request that is received by the receiving unit 401; a sending unit 403 configured to send the M2M service request to a target M2M service entity when the determining result is yes.

In addition, the sending unit 403 of the connection network is configured to send an access rejection message to the target M2M service entity when the determining result is no.

The determining unit 402 may further include: a current network load information obtaining subunit configured to obtain information about a current network load; a first determining subunit configured to determine, based on the information about the current network load, whether it is allowed to perform the M2M service indicated by the M2M service request; or a an access scheduling policy configuring subunit configured to pre-configure an access scheduling policy; a first identification information obtaining subunit configured to obtain identification information carried in the M2M service request; a second determining subunit configured to determine, based on the identification information, whether the M2M service request satisfies an access criterion of the access scheduling policy to determine whether it is allowed to perform the M2M service indicated by the M2M service request; or a subscription information configuring subunit configured to pre-configure subscription information of the source M2M service entity; a second identification information obtaining subunit configured to obtain the identification information carried in the M2M service request; and a third determining subunit configured to determine, based on the identification information, whether the M2M service request satisfies an access criterion of the subscription information of the source M2M service entity to determine whether it is allowed to perform the M2M service indicated by the M2M service request.

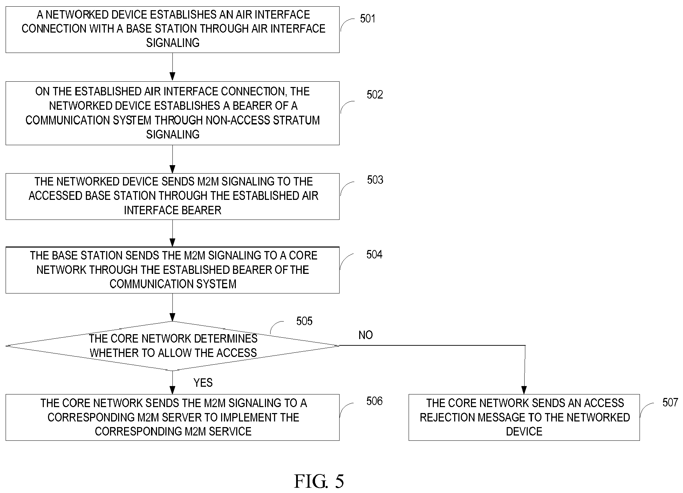

The technical solutions of the present invention are further described with reference to the foregoing methods and a specific application scenario. By taking a connection network based on a mobile communication network as an example, it is necessary to configure an access scheduling policy before an M2M service is performed. The policy may be configured as a parameter for resource scheduling according to information such as an access priority and a priority of the M2M service. After the configuration of the access scheduling policy is completed, the configured policy may be deployed on a certain entity in the connection network. Here, the entity is referred to as a mobility management entity. In the embodiments of the present invention, the configured policy is deployed on a certain entity in the core network and the core network performs the resource scheduling. In addition, if a networked device has subscription information in the system such as frequency information of an uplink request of the networked device (such as a limit on a request interval, a limit on the number of request times), a limit on the number of connections/bearers of a public data network (PDN), and access/service priorities, the mobility management entity needs to obtain the subscription information of the networked device from a subscription server of the networked device, as another parameter for the resource scheduling. In this embodiment, the networked device first initiates an uplink M2M service request, where a specific implementation process is shown in FIG. 5.

Step 501: A networked device establishes an air interface connection with a base station through air interface signaling.

Step 502: On the established air interface connection, the networked device establishes a bearer of a communication system through non-access stratum signaling.

Step 503: The networked device sends M2M signaling to the accessed base station through the established air interface bearer.

Step 504: The base station sends the M2M signaling to a core network through the established bearer of the communication system.

Step 505: The core network determines whether to allow the access.

In step 505, after receiving this M2M service request, a mobility management entity in the core network determines, based on resource scheduling information (such as information about a current network load, an access scheduling policy, subscription information of the networked device, or other judging criteria), whether it is allowed to perform the M2M service indicated by the M2M service request. For example, the mobility management entity may determine, with reference to a current load condition of the system, whether the request is received in an interval larger than a request interval in the subscription information, whether the number of request times is lower than the number of times in the subscription information, whether the number of connections/bearers established in an access network is lower than the number in the subscription information, whether the type of the service has a higher priority, so as to determine whether it is allowed to perform the M2M service. If the determining result is yes, step 506 is executed; if the determining result is no, step 507 is executed.

Step 506: The core network sends the M2M signaling to a corresponding M2M server to implement the corresponding M2M service.

Step 507: The core network sends an access rejection message to the networked device.

In step 507, after determining that it is not allowed to perform the M2M service, the mobility management entity in the core network sends an access rejection message to the networked device, where the message may further include an access rejection reason. Accordingly, time to initiate a next access request may also be carried in the access rejection message according to the subscription information, so that the networked device may initiate the next request with reference to the information.

In addition, after determining that the access is not allowed, the mobility management entity in the core network may not send the access rejection message to the networked device temporarily; instead, the mobility management entity records the current request. If the network conditions allow this access during a period of delay time acceptable to an M2M user or a service, subsequent access processes are continued.

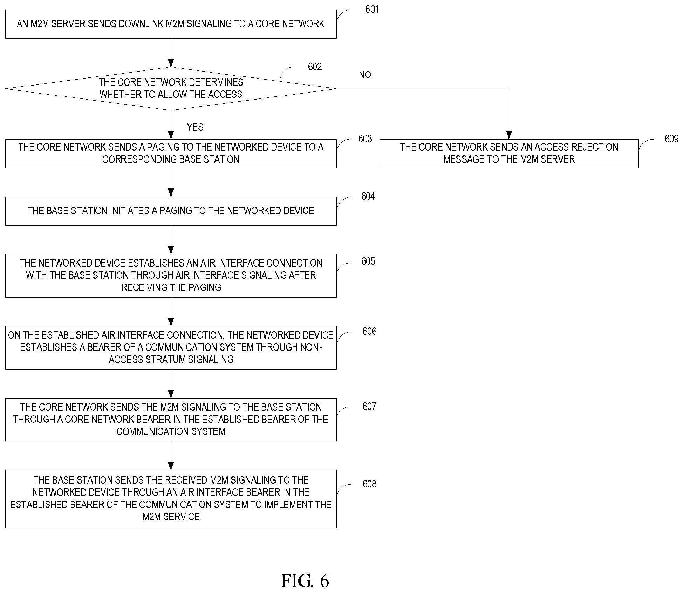

In addition to this method, the M2M service may also be performed by using the following method. Again, by taking a connection network based on a mobile communication network as an example, it is necessary to configure an access scheduling policy before the M2M service is performed. The policy may be configured as a parameter for resource scheduling according to information such as an access priority and a priority of the M2M service. After the configuration of the access scheduling policy is completed, the configured policy may be deployed on a certain entity in the connection network. Here, the entity is referred to as a mobility management entity. In the embodiments of the present invention, the configured policy is deployed on a certain entity in the core network and the core network performs the resource scheduling. In addition, if a networked device has subscription information in the system such as frequency information of downlink signaling received by the networked device (such as a limit on a request interval, a limit on the number of request time, and the like), a limit on the number of connections/carriers of a PDN, and access/service priorities, the mobility management entity needs to obtain the subscription information of the networked device from a subscription server of the networked device, as another parameter for the resource scheduling. In this embodiment, the networked device first sends a downlink M2M service request, where a specific implementation process is shown in FIG. 6.

Step 601: An M2M server sending downlink M2M signaling to a core network.

Step 602: The core network determines whether to allow the access.

In step 602, after receiving the M2M service request, a mobility management entity in the core network determines, based on resource scheduling information (such as information about a current network load, an access scheduling policy, subscription information of the networked device, or other judging criteria), whether it is allowed to perform the M2M service indicated by the M2M service request. For example, the mobility management entity may determine, with reference to a current load condition of the system, whether the request is received in an interval larger than a request interval in the subscription information, whether the number of request times is lower than the number of times in the subscription information, whether the number of connections/bearers established in an access network is lower than the number in the subscription information, whether the type of the service has a higher priority, so as to determine whether it is allowed to perform the M2M service. If the determining result is yes, step 603 is executed; if the determining result is no, step 609 is executed.

Step 603: The core network sends a paging to the networked device to a corresponding base station.

In step 603, the core network sends, based on a target address of the downlink signaling carried in the signaling, the signaling to the base station corresponding to the networked device.

Step 604: The base station initiates a paging to the networked device.

In step 604, the base station initiates, based on the target address information carried in the downlink signaling, a paging to the networked device corresponding to the target address information.

Step 605: The networked device establishes an air interface connection with the base station through air interface signaling after receiving the paging.

Step 606: On the established interface connection, the networked device establishes a bearer of a communication system through non-access stratum signaling.

Step 607: The core network sends the M2M signaling to the base station through a core network bearer in the established bearer of the communication system.

Step 608: The base station sends the received M2M signaling to the networked device by an interface bearer in the established bearer of the communication system to implement the M2M service.

Step 609: The core network sends an access rejection message to the M2M server.

In step 609, after determining that it is not allowed to perform the M2M service, the mobility management entity in the core network sends an access rejection message to the M2M server, where the message may also carry an access rejection reason. Accordingly, time to initiate a next access request may also be carried in the access rejection message according to the subscription information, so that the M2M server may initiate the next request with reference to the information.

In addition, after determining that the access is not allowed, the mobility management entity in the core network may not send the access rejection message to the M2M server temporarily; instead, the mobility management entity records the current request. If the network conditions allow this access during a period of delay time acceptable to an M2M user or a service, subsequent access processes are continued.

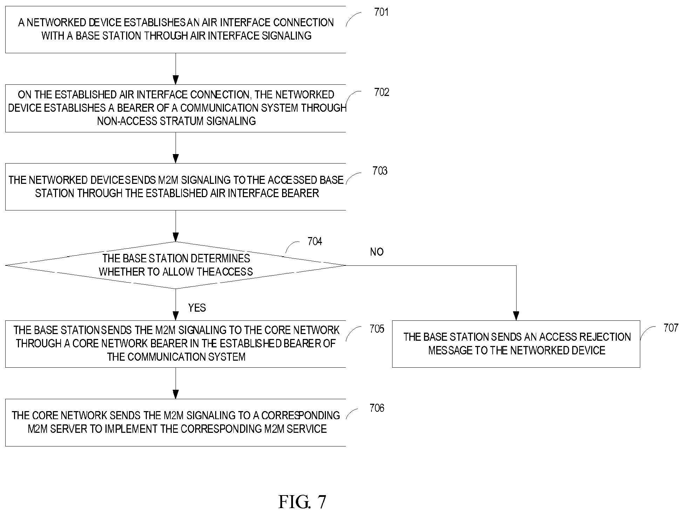

In the foregoing two embodiments, it is the core network that determines whether to allow the access and accordingly, it is the base station that perform the determining of the access. Before the M2M service is performed, it is first necessary to configure an access scheduling policy. The policy may be configured as a parameter for resource scheduling according to information such as an access priority and a priority of the M2M service. After the configuration of the access scheduling policy is completed, the configured policy may be deployed on a certain entity in the connection network. In this embodiment, the configured policy is deployed on a base station. When the configured policy is deployed, the policy may be directly deployed on the base station or may be deployed on a certain entity in the core network and then sent by the core network to the base station. In addition, if the networked device has subscription information in the system such as frequency information of an uplink request of the networked device (such as a limit on a request interval, a limit on the number of request times), a limit on the number of connections/bearers of a PDN, and access/service priorities, the base station needs to obtain the subscription information of the networked device from a subscription server of the networked device, as another parameter for the resource scheduling. In this embodiment, the networked device first initiates an uplink M2M service request, where a specific implementation process is shown in FIG. 7.

Step 701: A networked device establishes an air interface connection with a base station through air interface signaling.

Step 702: On the established air interface connection, the networked device establishes a bearer of a communication system through a non-access stratum signaling.

Step 703: The networked device sends M2M signaling to the accessed base station through the established air interface bearer.

Step 704: The base station determines whether to allow the access.

In step 704, after receiving the M2M service request, a base station determines, based on the resource scheduling information (such as information about a current network load, an access scheduling policy, subscription information of the networked device, or other judging criteria), whether it is allowed to perform the M2M service indicated by the M2M service request. For example, the base station may determine, with reference to a current load condition of the system, whether the request is received in an interval larger than a request interval in the subscription information, whether the number of request times is lower than the number of times in the subscription information, whether the number of connections/bearers established in an access network is lower than the number in the subscription information, whether the type of the service has a higher priority, so as to determine whether it is allowed to perform the M2M service. If the determining result is yes, step 705 is executed; if the determining result is no, step 707 is executed.

Step 705: The base station sends the M2M signaling to the core network through a core network bearer in the established bearer of the communication system.

Step 706: The core network sends the M2M signaling to a corresponding M2M server to implement the corresponding M2M service.

Step 707: The base station sends an access rejection message to the networked device.

In step 707, after determining that it is not allowed to perform the M2M service, the base station sends an access rejection message to the networked device, where the message may also carry an access rejection reason. Accordingly, time to initiate a next access request may also be carried in the access rejection message according to the subscription information, so that the networked device may initiate the next request with reference to the information.

In addition, after determining that the access is not allowed, the base station in the core network may not send the access rejection message to the networked device at the moment temporarily; instead, the base station records the current request. If the network conditions allow the access during a period of delay time acceptable to a M2M user or a service, subsequent access processes are continued.

It also should be noted that the relational terms (such as "first" and "second") herein are only used to distinguish one entity or operation from another entity or operation without necessarily requiring or implying any such actual relationship or order between these entities or operations. Furthermore, the terms "comprise", "include," or any other variants are intended to be non-exclusive, so that a process, method, article, or device that include a list of elements not only includes those elements but also includes other elements which are not expressly listed or are inherent to the process, method, article, or device. Without any additional limitations, an element preceded by "includes a ..." does not preclude the existence of additional identical elements in the process, method, article, or device that includes the element.

Those of ordinary skilled in the art may understand that all or part of steps in the foregoing method embodiments may be implemented by a program instructing relevant hardware. The program may be stored in a computer readable storage medium, and when the program is executed, the steps of the foregoing method embodiments are executed; and the storage medium may be any medium that may store program codes, such as a Read Only Memory (ROM), a Random Access Memory (RAM), a magnetic disk, and a compact disk.

The foregoing description of the disclosed embodiments enables those skilled in the art to implement or use the present invention. Various modifications to these embodiments are readily apparent to those skilled in the art, and the general principles defined here may be applied to other embodiments without departing from the spirit and scope of the present invention. Thus, the present invention is not intended to be limited to the embodiments shown here, but is complaint with the broadest scope consistent with the principles and novel features disclosed herein.

## Claims

1. A non-transitory computer-readable storage medium comprising instructions which, when executed by a computer, cause the computer to carry out the steps of a method for implementing a Machine-to-Machine, M2M, service, wherein the method comprises:
receiving an M2M service request from a source M2M service entity (201), wherein the M2M service request comprises information about an M2M service access mode;
judging whether it is allowed to perform an M2M service indicated by the M2M service request according to resource scheduling information (202), wherein the resource scheduling information comprises different priorities set for different M2M service access modes; and
sending the M2M service request to a target M2M service entity according to target address information carried in the M2M service request, when judging that it is allowed to perform the M2M service indicated by the M2M service request according to the resource scheduling information (203).

2. The method according to claim 1, further comprising:
sending an access rejection message to the source M2M service entity, or recording the M2M service request and allowing the source M2M service entity to resend the M2M service request during a period of time when judging that it is not allowed to perform the M2M service indicated by the M2M service request according to the resource scheduling information.

3. The method according to claim 2, wherein the access rejection message comprises an access rejection reason and/or time for the source M2M service entity to initiate a next M2M service request.

4. An apparatus comprising at least one processor and at least one storage medium storing instructions for execution by the processor such that, when the instructions are executed, the processor is configured to:
receive an Machine-to-Machine, M2M, service request from a source M2M service entity (201), wherein the M2M service request comprises information about an M2M service access mode;
judge whether it is allowed to perform an M2M service indicated by the M2M service request according to resource scheduling information (202), wherein the resource scheduling information comprises different priorities set for different M2M service access modes; and
send the M2M service request to a target M2M service entity according to target address information carried in the M2M service request, when judging that it is allowed to perform the M2M service indicated by the M2M service request according to the resource scheduling information (203).

5. The method according to claim 4, wherein the processor is further configured to:
send an access rejection message to the source M2M service entity, or recording the M2M service request and allowing the source M2M service entity to resend the M2M service request during a period of time when judging that it is not allowed to perform the M2M service indicated by the M2M service request according to the resource scheduling information.

6. The method according to claim 5, wherein the access rejection message comprises an access rejection reason and/or time for the source M2M service entity to initiate a next M2M service request.

7. A system for implementing a Machine-to-Machine, M2M, service, comprising: a connection network, and a source M2M service entity and a target M2M service entity that are connected to the connection network in a communicable manner, the connection network comprises a receiving unit, a judging unit, and a sending unit, wherein:
the receiving unit (401) is configured to receive an M2M service request from a source M2M service entity, wherein the M2M service request comprises information about an M2M service access mode;
the judging unit (402) is configured to judge whether it is allowed to perform an M2M service indicated by the M2M service request according to resource scheduling information,
wherein the resource scheduling information comprises different priorities set for different M2M service access modes; and
the sending unit (403) is configured to send the M2M service request to a target M2M service entity when the judging unit judges that it is allowed to perform the M2M service indicated by the M2M service request according to the resource scheduling information.

8. The connection network according to claim 7, wherein the sending unit is further configured to send an access rejection message to the source M2M service entity when the judging unit judges that it is not allowed to perform the M2M service indicated by the M2M service request according to the resource scheduling information .

9. The connection network according to claim 8, wherein the the access rejection message comprises an access rejection reason and/or time for the source M2M service entity to initiate a next M2M service request.
